# EUROPEAN PATENT SPECIFICATION

(11) **EP 1 305 690 B1**
(45) Date of publication and mention of the grant of the patent: **25.03.2009**
(21) Application number: 01938533.5
(22) Date of filing: 05.06.2001
(51) Int. Cl.: G06F 17/00, H04L 29/08

(54) **METHOD OF NAVIGATING THROUGH CONTENT OF CELLULAR NETWORK**
VERFAHREN ZUM NAVIGIEREN DURCH DEN INHALT EINES ZELLULAREN NETZWERKS
PROCEDE DE NAVIGATION A TRAVERS LE CONTENU D'UN RESEAU CELLULAIRE

(30) Priority: 05.06.2000 US 209726 P; 15.11.2000 US 713275
(43) Date of publication of application: 02.05.2003
(73) Proprietor: Unipier Mobile Ltd., 36880 Netanya (IL)
(72) Inventor: KALISH, Dan, 43728 Rannana (IL); KALISH, Yaron, 34608 Haifa (IL); BROSH, Eyal, 46377 Herzliya (IL)
(74) Representative: Sarpi, Maurizio
(86) International application number: PCT/IL2001/000515
(87) International publication number: WO 2001/095236

(56) References cited:
- WO-A-00/39666
- US-B1- 6 185 535
- THYRA RAUCH ET AL: "Enabling the book metaphor for the World Wide Web - Disseminating on-line information as dynamic Web documents - Commentary" IEEE TRANSACTIONS ON PROFESSIONAL COMMUNICATION, IEEE SERVICE CENTER, PISCATAWAY, NJ, US, vol. 40, no. 2, June 1997 (1997-06), XP011042692 ISSN: 0361-1434
- BRITTON K H ET AL: "Transcoding: extending e-business to new environments" IBM SYSTEMS JOURNAL IBM USA, vol. 40, no. 1, 2001, pages 153-178, XP002457414 ISSN: 0018-8670
- RAKESH MOHAN ET AL: "Adapting Multimedia Internet Content for Universal Access" IEEE TRANSACTIONS ON MULTIMEDIA, IEEE SERVICE CENTER, PISCATAWAY, NJ, US, vol. 1, no. 1, March 1999 (1999-03), XP011036278 ISSN: 1520-9210

## Description

### BACKGROUND OF THE INVENTION

The present invention relates to wireless networks navigating practices. More specifically, the invention relates to methodologies and utilities for exploring and orienting through content of wireless networks.

WAP defines a communications protocol as well as an application environment. In essence, it is a standardized technology for cross-platform, distributed computing. WAP is very similar to the combination of TCP/IP and HTTP except that it adds in one very important feature: optimization for low-bandwidth, low-memory, and low-display capability environments. These types of environments include PDAs, wireless phones, pagers, and virtually any other communications device.

WAP client applications make requests very similar in concept to the URL concept in use on the Web. As a general example, consider the following explanation (exact details may vary on a vendor-to-vendor basis). A WAP request is routed through a WAP gateway, which acts as an intermediary between the "bearer" used by the client (GSM, CDMA, TDMA, etc.) and the computing network that the WAP gateway resides on (The Internet in most cases). The gateway then passes the request as an HTTP request to a server on the computing network. The said server retrieves contents or calls CGI scripts, Java servlets, or some other dynamic mechanism, then formats data for return to the client. This data is formatted as WML (Wireless Markup Language), a markup language based directly on XML.

Once the WML content (known as a deck) has been prepared, the gateway then sends the completed request back (in binary form due to bandwidth restrictions) to the client for display and/or processing. The client retrieves the first card off of the deck and displays it on the monitor.

The deck of cards metaphor is designed specifically to take advantage of small display areas on handheld devices. Instead of continually requesting and retrieving cards (the WML equivalent of HTML pages), each client request results in the retrieval of a deck of one or more cards. The client device can employ logic via embedded WML Script (the WAP equivalent of client-side JavaScript) for intelligently processing these cards and the resultant user inputs.

To sum up, the client makes a request. This request is received by a WAP gateway that then processes the request and formulates a reply using WML.

When ready, the WML is sent back to the client for display. As mentioned earlier, this is very similar in concept to the standard stateless HTTP transaction involving client Web browsers.

As known, when conventionally surfing through the web, the user navigates easily from one web page to another using the browser navigation utilities such as back and next, in contrast, when surfing through wireless networks using micro-browsers on constrained devices, e.g. wireless phones, even basic navigation utilities are not available since Wireless phones have size, weight and cost constraints which limit the memory and processing capabilities they possess. Furthermore, the diversity of devices and of user interfaces of micro-browsers (menus buttons etc.) creates a situation where the user is highly dependant on the actual content provided in the WML deck for his orientation and navigation.

As a result of these navigation constraints the users are generally restricted to the content provided by wireless communication and content suppliers. In most cases the user is enabled to navigate only to content providers having commercial engagements with the wireless communication suppliers. As a result cross-site navigation is virtually impossible.

Furthermore the navigation constraints make simple surfing activities almost impossible, for example the option of going through a search result or any list of links. Once selecting a link there is no promise to the user that the content he is directed to will feature a "back" button. Thus when following a link he may be rendered unable to return to the list he was going through.

In the prior art, the article "Enabling the book metaphor for the World Wide Web: Disseminating on-line information as dynamic Web documents" by Rauch et al. (IEEE Transactions on Professional Communication, Vol. 40, No. 2, June 1997) discloses the generation of HTML pages from an electronic book file, wherein the HTML pages are augmented with navigation elements, e.g. for navigating forward and backward through the pages of the book or returning to the book's table of contents.

It is thus the prime object of the invention to provide a method and system for maximizing the Internet access capabilities of these wireless phone devices and various other constrained devices while maintaining a small memory and CPU footprint.

It is thus a further object of the invention to provide navigation utilities enabling efficient navigation through a wireless network or when using various constrained navigation devices.

It is a further object of the invention to provide a method of accelerating the delivery of content to the user of such network

### SUMMARY OF THE INVENTION

A method of creating dynamic navigation platform for orienting through network hyper text language based pages ("network page") by designated mobile device comprising the steps of: Receiving any collection of network pages ("track pages") and arranging them into sequences of network pages' URLs ("navigation track"), Placing navigation track at accessible location on the network, loading navigation track from navigation track source, identifying current user location ("current network page") within the navigation track, downloading track page data according to current track page, editing current track page hyper text content ("modified track page") by: Adding hypertext navigation items linking to navigation options, as determined by track type and location; exchanging URLs' references of embedded objects to absolute URL references and adding further hypertext language content or command ("added hypertext"), sending the modified current track page content to the user display and modifying the navigation track according to current track page type, content or address;

### BRIEF DESCRIPTION OF THE DRAWINGS

These and further features and advantages of the invention will become more clearly understood in the light of the ensuing description of a few preferred embodiments thereof, given by way of example only, with reference to the accompanying drawings, wherein-
Fig. 1 is a general diagrammatic representation of the environment in which the present invention is practiced;
Fig. 2 is a flow-chart of page pre-processing according to the present invention;
Fig. 3 is a flow-chart of starting track-navigation process without caching;
Fig. 4 is a flow-chart of processing for each user request;
Fig. 5 is a flow chart of processing done for a user track navigation request. E.g. "Next"/"Previous";
Fig. 6 is a flow-chart of processing done for a user request of following a link of the hypermedia source;
Fig. 7 is a flow-chart of processing done for a user request to view the navigational track;
Fig. 8 is a flow-chart of processing done for a user request to re-load the current trail sequence from the source of the track sequence;
Fig. 9 is a flow-chart of starting trail-navigation process with caching and pre-fetching of pages;
Fig. 10 is a flow-chart of processing for each user request with caching and pre-fetching of pages;
Fig. 11 is a flow chart of processing done for a user trail navigation request. E.g. "Next"/"Previous" with caching and pre-fetching of pages;
Fig. 12 is a flow-chart of processing done for a user request of following a link of the current hypermedia source with caching and pre-fetching of pages;
Fig. 13 is a flow-chart of processing done for a user request to view the navigational trail with caching and pre-fetching of pages;
Fig. 14 is a flow-chart of processing done for a user request to re-load the current trail sequence from the source of the trail sequence with caching and pre-fetching of pages;
Fig. 15 is a flow-chart of processing done to allow further client acceleration through concatenation of WML cards into larger decks;

### DETAILED DESCRIPTION OF THE PREFERRED EMBODIMENTS

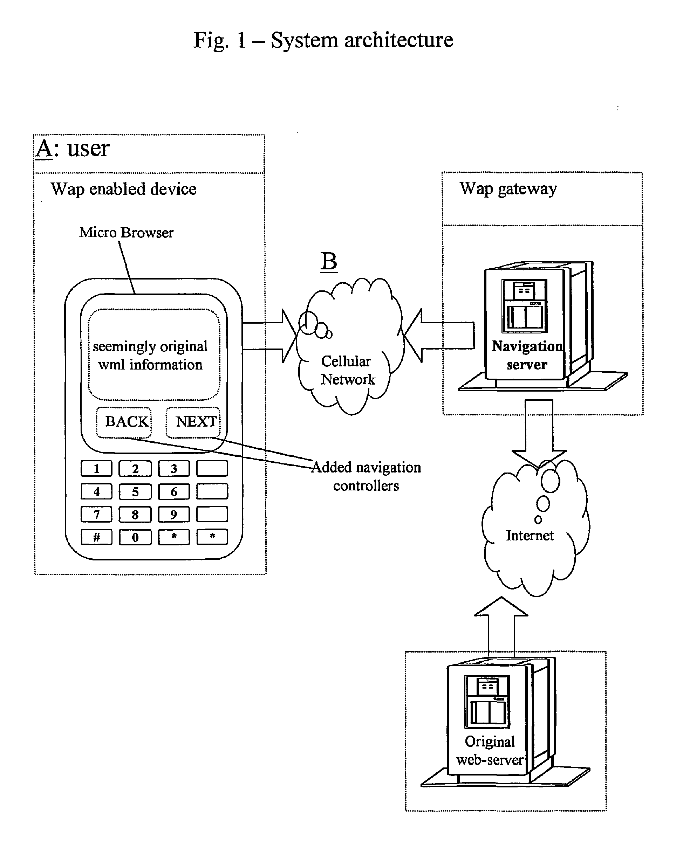

Fig. 1 illustrates one possible network configuration, in which the present invention can be implemented.

Referring to Fig. 1 of the drawings, it will be seen that a user A is connected through cellular network B to designated server (hereinafter called "the navigation server"), this server serves as an intermediator gateway between the user mobile device (hereinafter called "the user agent") and the Internet web servers containing data available for user access (hereinafter called "the original server").

Let us assume that the user A has placed a request for a hypertext based data file (hereinafter called the "track page"), (the most common standard for cellular networks is a WML page) which is part of a designated dynamic track (hereinafter called the "navigational track") initiated by the navigation server.

Navigational tracks, i.e. pre-set sequences of hypermedia sources, are necessary for the implementation of the navigation method of the present invention. However, although being pre-set at the actual time of navigation, these sequences need not be determined until such time as they are to be used. Such pre-set of sequences can originate from various sources:
1. Man-made sequence: This sequence may be prepared on a general-purpose computer using traditional navigation utilities (e.g. Web Browser Software). Alternatively the sequence may be entered from the constrained device either by way of keying in each nodes data or by way of a provision amongst the navigational aids for selecting designated or current URL as a node in the sequence. For example such a track of hypermedia links might be the persons personal information services e.g. stocks, local weather, etc.
2. Mechanically produced on demand resource locators (on demand track): A group of resource locators may be provided in form of a hypermedia source, or in any other computerized media and format accessible to the navigation server at the time of track creation. For clarity, take the example of location-based services for mobile users. For instance a person roaming the streets with a mobile hand set might want to view a sequence of upscale restaurants in his vicinity. Given a computerized service capable of providing the raw data comprising required restaurants, for instance by way of database query provided users location and required class of restaurants, a navigational trail may be created on the fly from said query result.
3. Search results: In this case the required collection of hypermedia links may be extracted from the hypermedia source that is the final output of the search engine, or from any intermediate interior representation of said collection of links, such as a database query result.
4. Any network information source: transformed, for or by the navigation server, into the hypermedia format appropriate for the user agent. An example of such implementation might be a users email inbox, from which each individual email can be accessed, if necessary translated into appropriate hypermedia representation, and linked together with all the other emails to form a trail. Thus enabling the user to browse conveniently and in an accelerated manner through his/her pending mail.
5. Any network hypermedia page, to which a set of rules is associated in the form of meta-data, where the navigation trail is determined upon user agent accessing this page. In this case the navigational sequence may be any subset of the hypermedia links in the said page, as selected according to said associated rules. Examples of such rules are: A frequently accessed subset of links, predicted according to statistically gathered prior users' behavior; Links within the hypermedia source designated by name (E.g. "more...", "continue...", etc.); A pre-set number of links from the start of the hypermedia page; etc.

According to the prior art routine, when a user places a request for a WML page through wireless network, after receiving the requested page, the navigation capabilities were limited. The user can't always back trace his foot steps or easily go through a list of hyperlinks. Once the user selected one hyperlink it is not promised that he can return to the original hyperlinks list in one or two click operation.

Taking into consideration that a certain time lag is involved in downloading each WML page it will be appreciated that this process is cumbersome and time consuming.

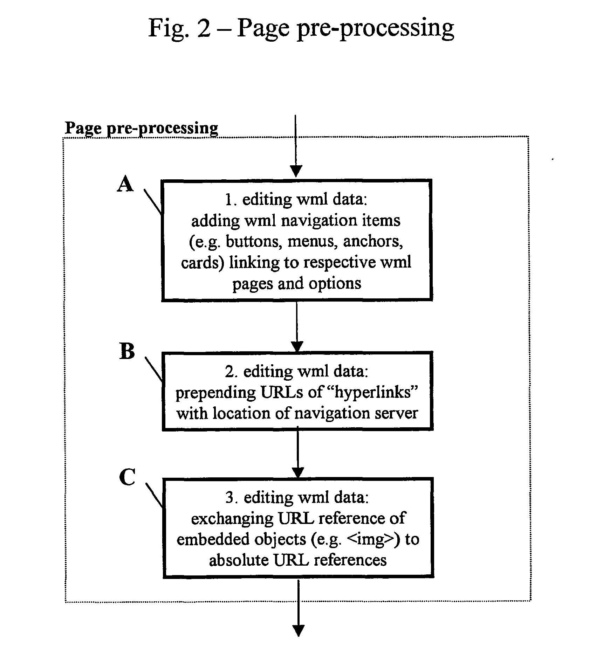

Accordingly, it is herein proposed that before transmitting the track page through the wireless network the page is modified according to the process illustrated in Fig.2 (hereinafter call "the Editing Process"). The editing process serves two major purposes: first, to add navigation provisions into the original page, providing the user with various one click navigation utilities such as next or back buttons, more advanced utilities are described further bellow. Second, editing the hyperlinks URLs of the original page to force their targeted hyperlink page to be passed to the navigation server. As a result the hyperlink target page will be modified according to said editing process. This procedure enables the user to keep the one click added navigation utilities, even when navigating outside of the pre-planned navigation track.

The first purpose, that of adding navigation provisions, is achieved by operation A as illustrated in Fig 2.

Operation A is at the heart of the navigation provisioning. This is the process in which navigation elements are added to the hypertext source to allow for it to be presented as part of the track context.

There are several possible ways for implementing the added provisions depending on the specific markup language in use, on the data transfer protocol, and on the capabilities of the said navigational device.

For the sake of clarity we shall detail one such possible implementation, detailed in a constellation where WML is used as markup language, WAP protocol for data transfer and the WAP enabled mobile phone as navigational device in which the programming and storage capabilities of the device are constrained (such that the management of the navigation process is best handled on the server.)

First possible added provision is "Next" utility, which might be implemented as a navigation item addressed to the Navigation Server application, this navigation item comprises a first code representing the current location of the user amongst the track nodes and a second code representing the request of moving forward along the navigational track. According to alternative way, the navigation server might maintain an internal state indicating the user's current location within the navigation track (a current location code), the current location code can be extracted from any of a variety of user identifying characteristics (e.g. ISDN number, session id, SIM, and so forth, all dependant on the availability of such) coupled with the current location code of said user. The server in response to such forward request would alter the current location code to represent the new user agent location, and would return to the user the WML page appropriate for the new location.

In the above said constellation a "Show map" utility (as described down bellow) could be implemented as a navigation item addressed to the Navigation Server application, where the navigation item comprises a first code representing the current location of the user amongst the track nodes and a second code represents the request for viewing the map of the track. Alternatively the above-mentioned user identification mechanisms are applicable. The server, in response to such request, would prepare a WML deck representing the navigational track ("track map page") and return the latter to the user device. The track map page would contain links representing navigation track nodes, where each node's link would pass to the Navigation Server a request comprising a first code representing the request for relocating the user agent to this node and .a second code representing the requested new location of the user. The server in response to such request would alter its current location code to represent the new user agent location and would return the WML page associated with the new location to the user.

In the above said constellation said "Reload track" utility (as described down bellow) could be implemented as a navigation item addressed to the Navigation Server application, where the navigation item comprises a code representing the users request to reload the current navigation track. The server in response to request would again perform the process by which the current track was originally composed. Might this be loading a pre-prepared static representation of the navigation track, or any sequence of queries or procedures performed to comprise said track, as described above in section dealing with sources for navigational track.

The second purpose, that of redirecting the links, is achieved by operation B.

In the navigational provisioning described in this document, maintaining user orientation along the entire navigation process is an important feature. Given that the method described herein permits constraint-free navigation by following all hyper-media links of potential hypertext sources, a method is provided for maintaining said navigational orientation and navigational provisions for all hyper-media links accessible along the navigation session.

Operation B provides method for such context maintenance. In this modification process, the hypermedia source is scanned for detecting all elements of the markup language (appropriate for said hypermedia source) enabling redirection of the user agent to an alternate hypermedia source. Said hypermedia links are each replaced with a request to the navigation server, in which the alternate hypermedia source location identifier is passed as a parameter to the server. The server in response to such "Follow-link" request would retrieve requested hypermedia source, specified by parameter, from designated server and perform on it the same process described herein. There are several possible ways for implementing the described process depending on the specific markup language in use, on the data transfer protocol, and on the capabilities of the said navigational device. For the sake of clarity we shall detail one such possible implementation, wherein WML is the markup language, WAP is the transfer protocol used for data transfer and WAP enabled mobile phone as navigational device in which the programming and storage capabilities are constrained (such that the management of the navigation process is best handled on the server.)

In this constellation all WML elements of the WML deck being loaded and which enable loading of a new URL will be searched and replaced. Each relative URL would first be expanded to absolute form and would be passed as a parameter in a substituted URL pointing to the Navigation Server application. Upon receipt of such a request the navigation server would retrieve the original URL parameter from the request and read the requested WML source from the designated server. The server would then perform on the source the same process described herein and return the resulting WML deck to the user, thus maintaining the user context and navigation provisions.

The above actions are complemented by operation C as illustrated in Fig 2.

The above-mentioned modifications of processes A and B provide for user navigational aids and for maintaining user context while allowing free surfing in and out of the trail. For these processes all requests of the user agent are directed at the Navigation Server. In the hypermedia source there might be references to embedded objects that need not be accessed through the Navigation Server. In such case, since these embedded objects might be bundled on a computer with the original hypermedia source, the user agent may by its default behavior request them from the Navigation Server. To alleviate unnecessary traffic through the Navigation Server, and to expedite these embedded objects delivery, the hypermedia source may be altered in such a way as to instruct the user agent to retrieve said embedded objects from the original server from where the hypermedia source was retrieved.

According to alternative mode of operation C enabling to achieve acceleration of downloading embedded objects, by caching them at the navigation server together with the hypermedia source in which they are embedded, the navigation server may retrieve the embedded objects when they are encountered in the hypermedia source and cache them locally. As the user agent requests these embedded objects, they may be provided to the user agent from the cache of the Navigation Server. In such case the hypermedia links of said embedded objects would not be altered to instruct the user agent to retrieve said embedded objects from the original server.

For the purpose of clarity and exemplification, in the constellation described for modifications A and B above, such embedded objects would be image elements of the WML source, denoted by the <img> WML tag. In order to instruct the user agent to extract such embedded images directly from the original WML server, the URL denoting the source from which to read the image (as represented by the "ref" attribute of the <img> tag) would need to be replaced with the corresponding absolute URL reference to the image source.

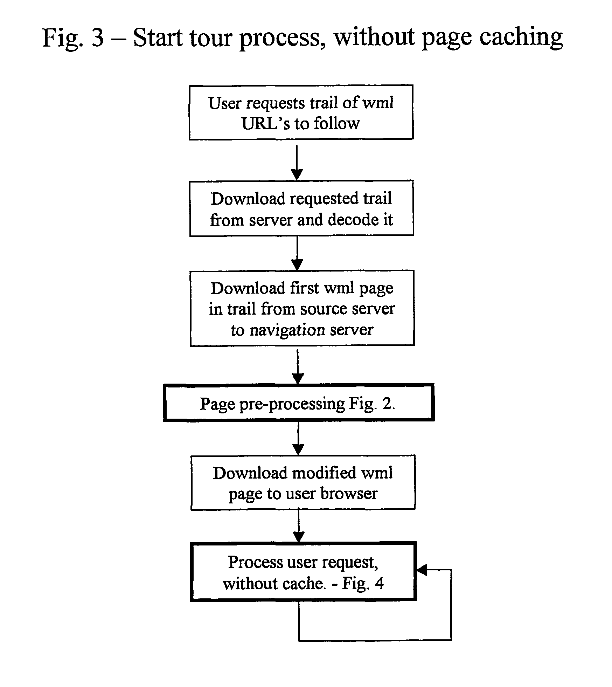

For example let us assume that the user has chosen an on-demand track of WML pages, the procedure as illustrated in Fig 3, takes place. The Navigation Server receives the users request for a track category. The server generates a dynamic sequence of WML page URLs adjusted according to up-to-date time and place, and user personal preferences. Let us assume the user requested a tour of restaurants in his vicinity, hence the sever will generate a track of WML pages providing the user with information of near by Italian (according to the user preference) restaurants open at the current time. The newly created track is decoded and temporarily maintained in the navigation server memory associated with requesting user's ID.

The tour category request can be further improved to serve for returning a search query. Once the navigating server receives query request, it is transmitted to appropriate search engine located on the original search server. The result search list received by the navigation server is dynamically processed and a respective track comprising the search result URL's is created. Optionally before transmitting the first track page as described down bellow the track map is transmitted in the form of WML page containing hyperlinks, this page is processed according to the Editing Process. This enable direct access to any of the returned URL's of the search result while keeping the user in the context of the track. A further proposed improvement to this concept is to enable the user to select multiple links from the page of search hyperlinks. Upon completion of such selection, a navigation track is produced containing only the user-selected search results. Thus enabling the user to traverse only those hyperlinks that are of interest to him/her.

The first track page is downloaded from the original web server to the navigation server and processed according to the Editing Process. The modified track page is transmitted to the user through the wireless network.

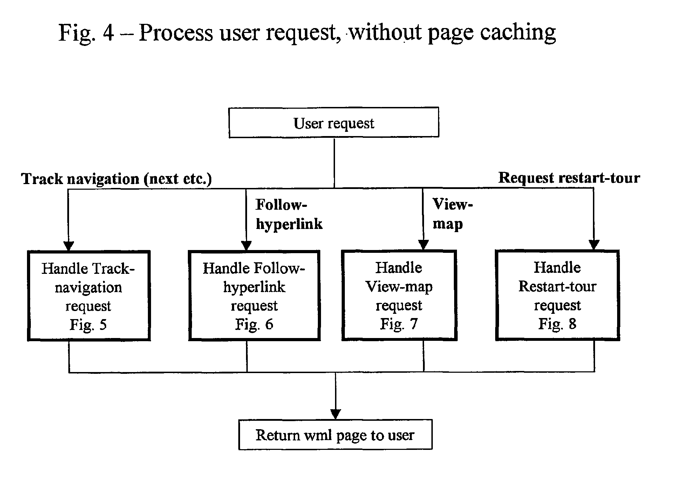

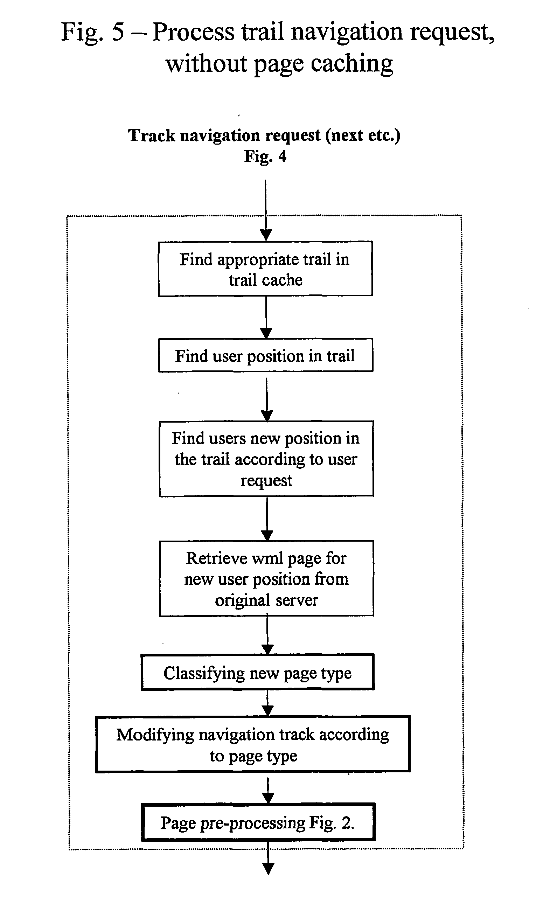

Once provided with modified track page the user has four alternatives (equivalent to respective added provisions as described above) as illustrated in Fig. 4. The first option for selecting one of the navigation buttons is illustrated in Fig 5. Upon receiving the navigation request, the navigation server identifies the respective track and traces user current position in the track.

According to the respective track details, the users current position and the users navigation request, the respective target track page is retrieved from the original server.

The new track page is classified according to its address, type (e.g. search result page) or specific hyperlinks (e.g. homepage), as consequence the navigation track is updated dynamically based on said classification and associated rules. For example such rules may modify the navigation track to include all search results hyperlinks in case the page was classified as a search page, the rules may be prediction module setting the track page according statistics base on user behavior.

The target track page is modified according to the Editing Process and transmitted to the user mobile device.

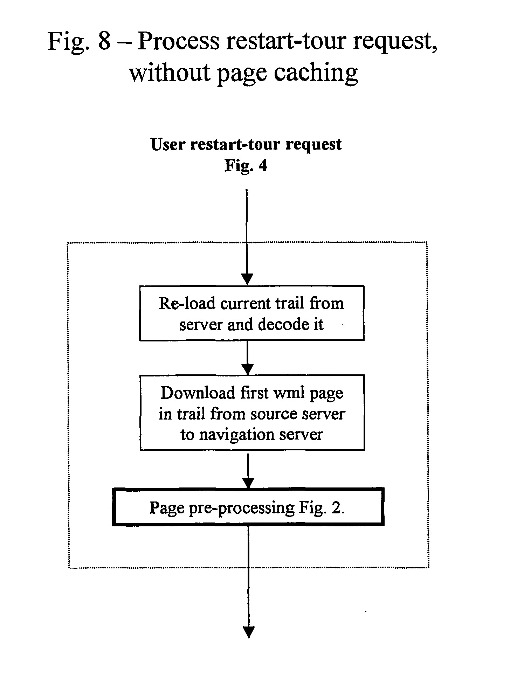

The second option of re-starting the track is illustrated in Fig 8, this process is equivalent to the previous process, but the target track page is always the first track page. Furthermore, the track itself is refreshed on the server to provide for tracks that can change while the user is navigating, for instance due to time elapsing, location changing, or manual alteration of the track.

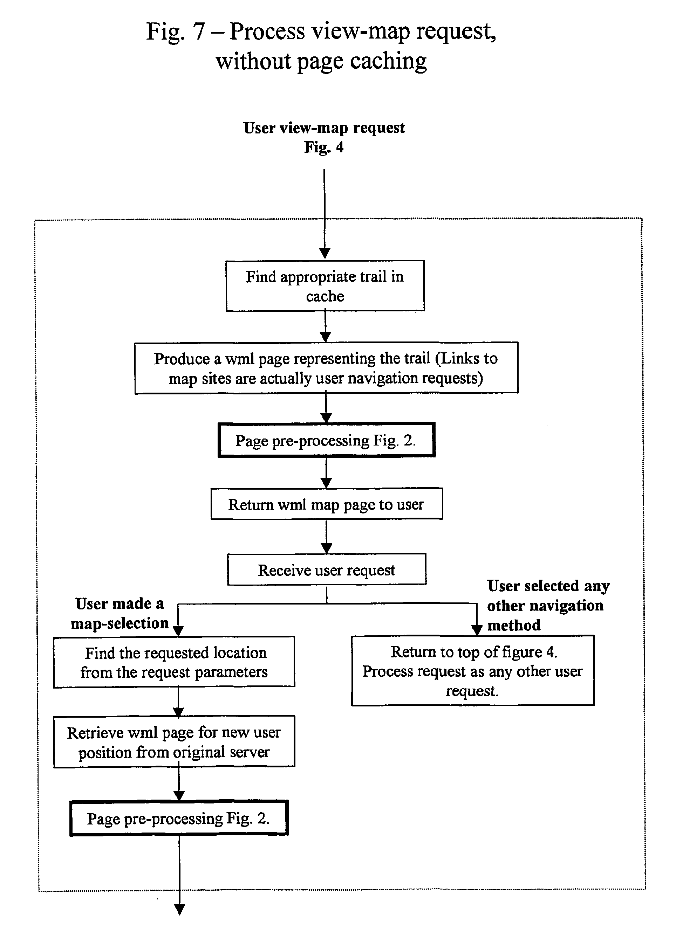

The third option provides the user with a map of the current track as illustrated in Fig 7. Upon receiving the user request, the navigation server produces a WML page representing the track stops, each stop representation acts as conventional hyperlink. A users selection of a map hyperlink will instruct the server to transfer the user to that node and context of the track. The map can be displayed as a simple list of links, as a tree directory, or as a directed graph wherein stops are represented by graph nodes, and the track direction by respective arrows. All as suitable for user preferences and to the rendering capabilities of the device.

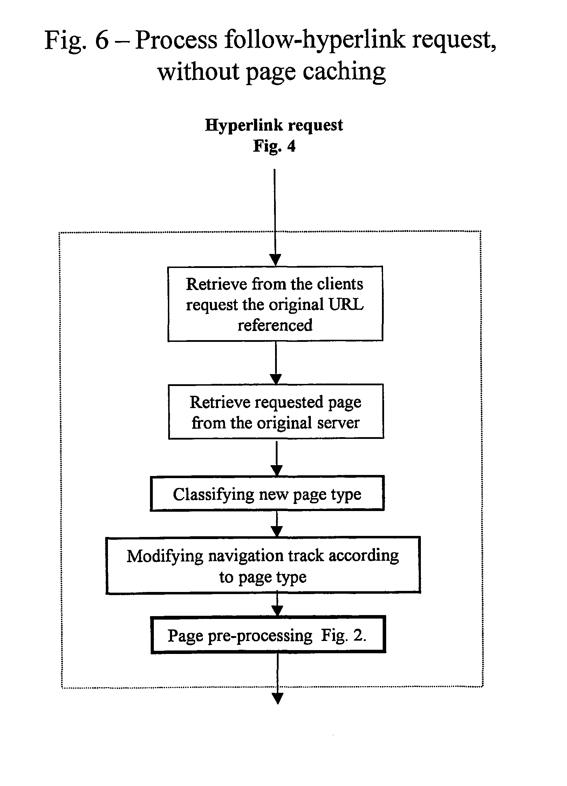

The fourth option as illustrated in Fig 6 resembles the conventional way of selecting hyperlinks, however when selecting the hyperlinks the user is provided with the same navigation utilities as provided by a track page. After the user has placed a request to navigate to one of the hyperlinks the target page is processed according to Editing Process. Before processing the target page the page is classified as described above and navigation track is updated respectively.

The editing process can take place at the navigation server or alternatively at the cellular device, depending on the cellular device processing-power and memory limitations.

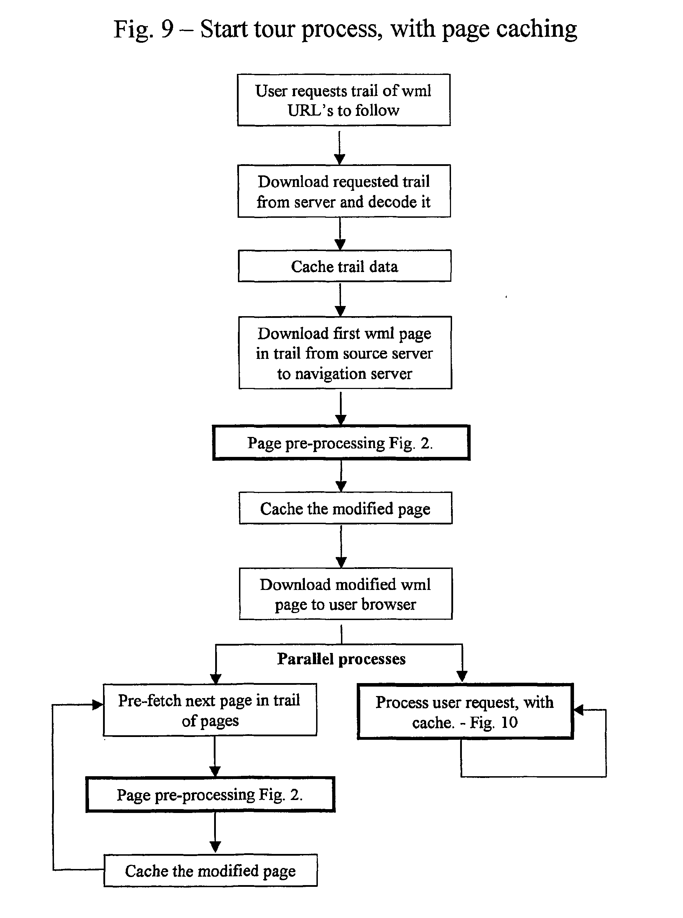

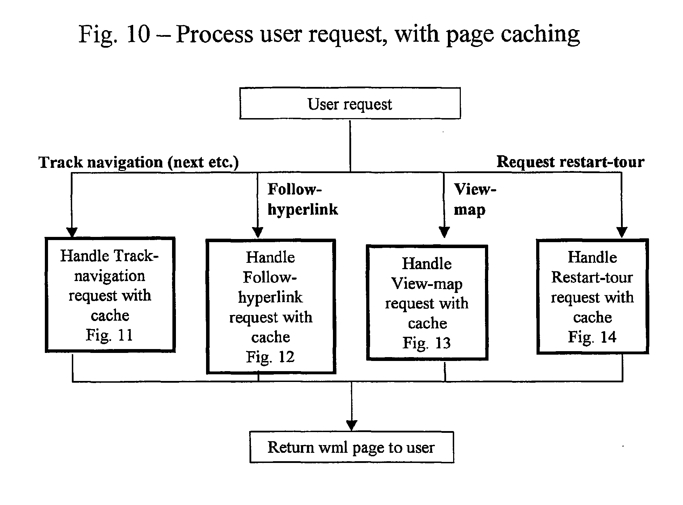

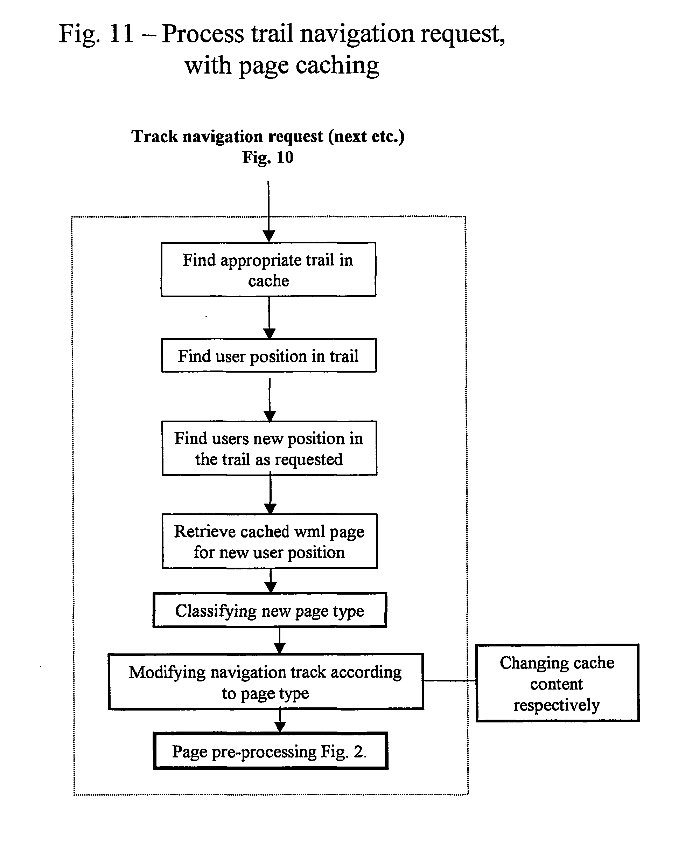

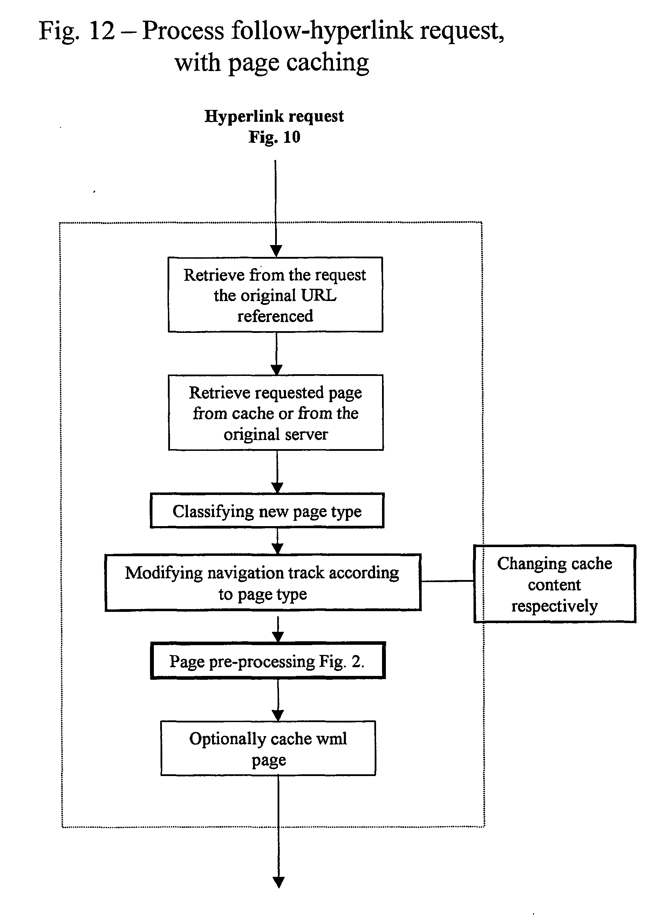

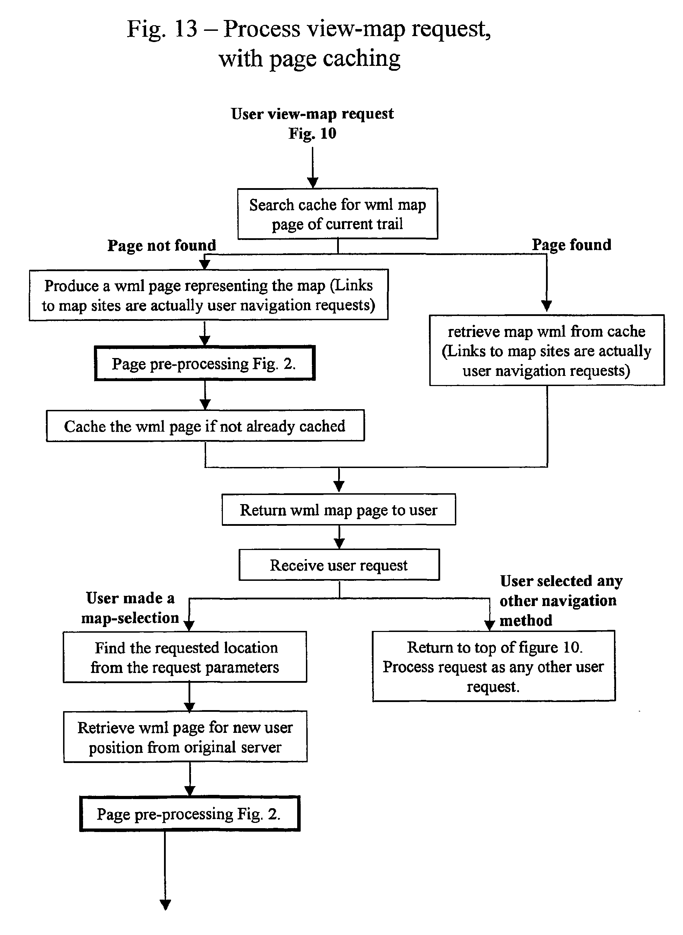

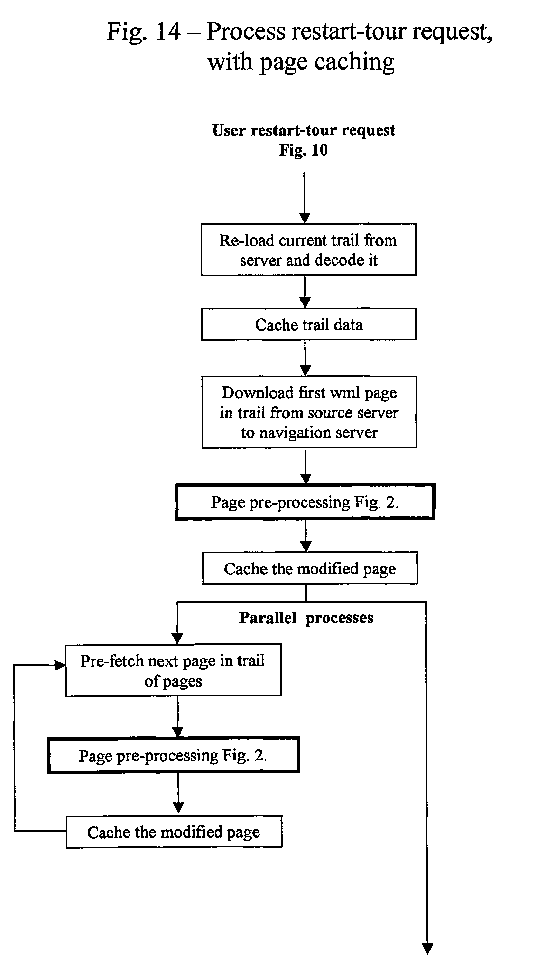

According to a further improvement offered by the present invention, it is enabled that after downloading the first requested track page, the navigation server automatically pre-fetch the next in-line track pages, the downloaded pages are processed according to the Editing Process and maintained in the cache memory of the navigation server. As a result, when the user requests the next track page or even a further page of the track, the navigating server checks the local cache, in case the requested page exists in cache memory it is instantly transmitted to the user. This improvement results in a much more efficient and fast process of providing the user with the requested track pages. The complete procedures of navigating according to this improvement are illustrated in Figs 9,10,11,12,13 and 14.

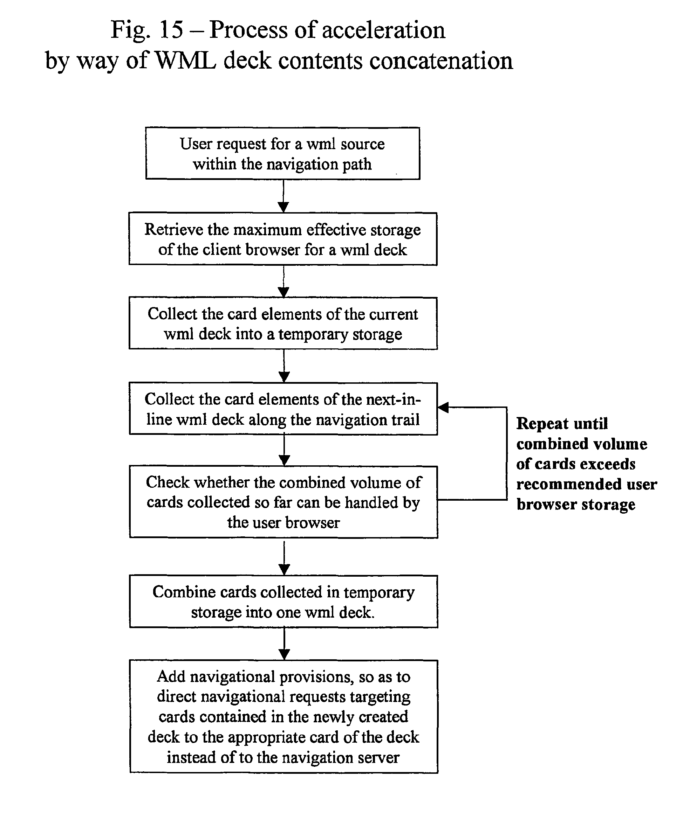

According to another improvement offered by the present invention, it is proposed to merge several track pages into one track page (hereinafter called the "united track page") in which all cards of several original track pages are integrated together. This integration process, as illustrated in Fig 15, is applied according to the memory limitation of user agent, the number of integrated pages is constrained by the memory capabilities of the user agent.

The advantages of this integration process are clear. Once the user requests the next-in-line track page, its content already exists in user-agent memory, the time lag of transferring the track page from the navigation server to the user agent is spared. Further more this process spares the need to apply the editing process separately to each track page, the editing process is applied only to the united track page.

The method and system according to the present invention can be implemented as navigation server service offered for cellular Internet providers or portal manger. Such provider may use the navigation server for improving navigation capabilities of their clients, hence attracting new clients to use their cellular services or network portal. The navigation track utility suggested by the present invention may be designed to fit the structure of specific portals thus improving the navigation capability within the portals pages and increasing the use of the portal pages.

Finally, it should be appreciated that the above-described embodiments are directed at a cellular communication environment. However, the invention in its broad aspect is equally applicable to computerized network communication in general, such as satellite, blue-tooth, and others.

While the above description contains many specificities, these should not be construed as limitations on the scope of the invention, but rather as exemplifications of the preferred embodiments. Those skilled in the art will envision other possible variations that are within its scope. Accordingly, the scope of the invention should be determined not by the embodiments illustrated, but by the appended claims and their legal equivalents.

## Claims

1. A computer-implemented method of creating a dynamic navigation platform for orienting through network hypertext language based network pages by designated mobile device , said method comprising the steps of:
A. Receiving any collection of network pages and arranging them into navigation tracks, which are sequences of network pages' URLs;
B. Placing a navigation track at accessible location on the network;
C. Loading the navigation track from navigation track source;
D. Identifying the current network page, which is the user's current location within the navigation track;
E. Downloading the network page data of the network page according to the current network page;
F. Modifying the current network page's hypertext content to produce a modified network page by:
F1. Adding hypertext navigation items linking to navigation options, as determined by track type and location;
F2. Exchanging URLs' references of embedded objects to absolute URL references; and
F3. Adding further hypertext language content or command
G. Sending the modified network page content to the user display; and
H. Modifying the navigation track according to current network page's type, content or address;
I. Repeating steps D, E, F, G and H for any new network page.

2. The method of claim 1 further enabling user interaction comprising the steps of:
J. Presenting in a mobile device screen respective information based on the current network page's content;
K. Enabling user interaction by enabling the user to select at least one navigation option, based upon embedded navigation items to permit navigation through navigation track;
L. Enabling user access to the added hypertext content or command;
M. Upon selecting the navigation option by the user, identifying navigation target address and updating the current navigation page respectively.

3. The method of claim 1 further comprising the step of : prior to loading the navigation track, updating the navigation track according to current circumstances e. g. time or place.

4. The method of claim 2 further comprising the step of enabling the user to edit the navigation track e. g. delete any page.

5. The method of Claim 1 using a designated proxy navigation server, further comprising the steps of:
- Further modifying of hypertext content of the page by modifying URLs of hyperlinks so as to point to the location of the navigation server;
- Upon selecting a hyperlink by the user, downloading the requested original page, defined as a target page by the navigation server;
- Modifying the target page hypertext content according to step F of claim 1 and the first step of claim 4; and
- Transferring the modified network page to the mobile device.

6. The method of claim 1 further comprising the steps of :
- Concurrently with downloading of the current network page in step E, further downloading the next-in-line network pages along navigation track;
- Modifying each downloaded network page according to the step F of claim 1;
- Upon receiving request navigation target address of any network page, checking cache memory of navigation server for said network page;
- Updating cache memory according to updated track navigation if necessary;
- Sending the respective network page from the navigation server to the user mobile device if the navigation target address matches any of the network pages in the navigation server cache memory.

7. The method of claim 6 further comprising the steps of:
- Prior to modifying the downloaded network pages, merging several network pages into one united network page network page wherein the size of the united network page is limited according to the mobile device constrains;
- Modifying the united network page according to the step F of claim 1 and first step of claim 5;
- Sending the modified united network page to the user mobile device; and
- Displaying the respective network page, placed at the united network page, upon user request for target address matching one of the network pages of the united network page.

8. The method of claim 1 wherein the navigation item contains the current track location code and a second code denoting a request for moving to one of: the next or previous network page along the navigation track.

9. The method of claim 1 wherein the navigation item contains a code denoting a request to re-load the navigation track from the navigation track source and to update the location-code of the user agent to the first track.

10. The method of claim 1 further comprising the step of generating a track map page, which is a network page containing a list of links where each link points at one of the network pages.

11. The method of claim 10 wherein each navigation item of the track map page contains a code denoting the appropriate network page location, further comprising the step of displaying the track map page at the user display.

12. The method of claim 1 further comprising the step of modifying any network page containing hyperlinks pointing at network pages by modifying said hyperlinks so as to point to the location of the navigation server.

13. The method of claim 1 wherein the hypertext language is in WML format.

14. The method of claim 1 wherein the mobile device is a cellular phone device.

15. The method of claim 1 further comprising the step of selecting network pages wherein the selection operation is performed by the user.

16. The method of claim 15 wherein the selection operation is performed by professional editors further comprising the step of placing the navigation track accessible to the users.

17. The method of claim 15 wherein the selection is processed and based on any dynamically created computer-generated collection of network pages, which is a dynamic page list.

18. The method of claim 17 further comprising the steps of:
- Presenting the user with the dynamic page list ; and
- Enabling the user to relocate directly to a location within the navigation track using the dynamic page list.

19. The method of claim 18 wherein the selection further comprises the steps of:
- Presenting the user with the dynamic page list ;
- Enabling the user to select multiple network pages from the dynamic page list.
- Upon completion of the user-selection, updating the dynamic page list to contain only said user-selected network pages.

20. The methods of claims 17,18 and 19, wherein the dynamic page list is a search result list.

21. The methods of claims 17,18 and 19, wherein the dynamic page list is an inbox mail list.

22. The methods of claims 17,18 and 19, wherein the dynamic page list is created according to defined rules based on current network page properties.

23. The method of claim 7 wherein each network page is a WML deck and the network pages are merged together into the united network page in the form of a deck containing cards collected from the different WML decks of the navigation track.

24. The method of claim 22 further comprising the step of displaying network pages locally in user agent from united deck upon user navigation requests to such pages.

25. The method of claim 22 further comprising the step of collecting WML pages until size of the united deck is optimized with respect to specific mobile device capabilities.

26. A communication server supporting navigation utilities through network of hypertext language based network pages of designated mobile devices for displaying the content of the network pages and enabling user interaction, said server comprising:
A. Management means for organizing a dynamic collection of network pages, arranging said collection into navigation tracks, which are sequences of network pages' URLs and storing said navigation tracks;
B. Identifying means for updating current user location within the navigation track and recording a track location-code, which is the code of said location;
C. Communication means for downloading the network page data according to current track location-code and sending modified network pages to users' mobile devices;
D. Modifying means for manipulating the current network page hypertext content by:
D1. Adding hypertext navigation items linking to navigation options;
D2. Exchanging URLs' references of embedded objects to absolute URL references; and
D3. Adding further hypertext language content or command
E. Track modification module for updating the navigation track according to new navigation page type, address or content.

27. The server of claim 26 further comprising an updating module for modifying the navigation track according current circumstances.

28. The server of claim 26 further comprising of pre-fetching module enabling downloading the next-in-line pages along the navigation track concurrently with downloading of the current network page.

29. The server of claim 26 further comprising a compressing module enabling merging several network pages into one united network page wherein the size of the united network page is limited according to the mobile device constraints.

30. The server of claim 26 wherein the navigation item contains the current track location code and a second code denoting a request for moving to the next or previous network page along the navigation track.

31. The server of claim 26 wherein the navigation item contains a code denoting a request to reload the navigation track from the navigation track source and to update the location-code of the user agent to the first track.

32. The server of claim 26 further comprising a page generator module for creating a track map page containing a list of links where each link points at one of the network pages.

33. The server of claim 26 wherein each of the navigation items contains a code denoting the appropriate network page location and displaying the track map page at the user display.

34. The server of claim 26 wherein the hypertext language is in WML format.

35. The server of claim 26 wherein the mobile device is a cellular phone device.

36. The server of claim 26 further comprises selection means for selecting network pages wherein the selection operation is performed by the user.

37. The server of claim 36 wherein the selection operation is performed by professional editors enabling to place the navigation track accessible to the users.

38. The server of claim 26 wherein the navigation track is adapted to a given structure of network pages.

39. The server of claim 36 wherein the selection operation is processed and based on any dynamically created computer-generated collection of network pages, which is a dynamic page list.

40. The server of claim 39 further comprising an interactive module enabling the user to modify the dynamic page list.

41. The server of claims 37, 38 and 39, wherein the dynamic page list is a search result list.

42. The server of claims 37, 38 and 39, wherein the dynamic page list is an inbox mail list.

43. The server of claims 37, 38 and 39, wherein the dynamic page list is created according to defined rules based on properties of the current network page.

44. The server of claim 29 wherein each network page is a WML deck and the network pages are merged together into the united network page in the form of a deck containing cards collected from the different WML decks of the navigation track.

45. The server of claim 44 further comprising an optimizing module for collecting WML pages until the size of the united deck is optimized with respect to specific mobile device capabilities.

## Patentansprüche

1. Computerimplementiertes Verfahren zum Erzeugen von einer dynamischen Navigations-Plattform zur Orientierung durch Netzwerkseiten, welche auf einer Netzwerk-Hypertext-Sprache basieren, durch eine zugewiesene Mobilvorrichtung, wobei das Verfahren die Schritte enthält:
A. Empfangen einer jeglichen Ansammlung von Netzwerkseiten und Anordnen derer in Navigationsbahnen, welche Sequenzen von Netzwerkseiten-URLs sind;
B. Platzieren von einer Navigationsbahn an einen zugreifbaren Ort auf dem Netzwerk;
C. Laden der Navigationsbahn von einer Navigationsbahn-Quelle;
D. Identifizieren der derzeitigen Netzwerkseite, welche der aktuelle Ort des Benutzers ist, innerhalb der Navigationsbahn;
E. Herunterladen der Netzwerkseite-Daten von der Netzwerkseite gemäß der aktuellen Netzwerkseite;
F. Modifizieren des Hypertext-Inhaltes der aktuellen Netzwerkseite, um eine modifizierte Netzwerkseite zu erzeugen, durch:
F1. Hinzufügen von Hypertext-Navigationselementen, welche auf Navigationsoptionen verweisen, wie durch einen Bahntyp und einen Ort bestimmt;
F2. Austauschen von URLs-Referenzen von eingebetteten Objekten auf absolute URL-Referenzen; und
F3. Hinzufügen eines weiteren Hypertext-Sprache-Inhaltes oder Befehls;
G. Senden des modifizierten Netzwerkseite-Inhaltes an die Benutzer-Anzeige; und
H. Modifizieren der Navigationsbahn gemäß dem aktuellen Netzwerkseite-Typ, Inhalt oder Adresse;
I. Wiederholen von Schritten D, E, F, G und H für jegliche neue Netzwerkseite.

2. Verfahren nach Anspruch 1, welches ferner eine Benutzer-Interaktion ermöglicht, welches die Schritte enthält:
J. Darstellen von einer jeweiligen Information basierend auf dem aktuellen Netzwerkseite-Inhalt auf einem Mobilvorrichtungs-Schirm;
K. Ermöglichen von einer Benutzer-Interaktion, indem es dem Benutzer ermöglicht wird, zumindest eine Navigationsoption auszuwählen, basierend auf eingebetteten Navigationselementen, um eine Navigation über eine Navigationsbahn zuzulassen;
L. Ermöglichen eines Benutzerzugriffes auf den hinzugefügten Hypertext-Inhalt oder Befehl;
M. Nach einem Auswählen der Navigationsoption durch den Benutzer, jeweils Identifizieren von einer Navigations-Zieladresse und Aktualisieren der aktuellen Navigationsseite.

3. Verfahren nach Anspruch 1, welches ferner den Schritt enthält:
Aktualisieren, vor einem Laden von der Navigationsbahn, von der Navigationsbahn gemäß aktueller Umstände, beispielsweise eine Zeit oder ein Ort.

4. Verfahren nach Anspruch 2, welches ferner den Schritt enthält, es dem Benutzer zu ermöglichen, die Navigationsbahn zu editieren, beispielsweise ein Löschen von irgendeiner Seite.

5. Verfahren nach Anspruch 1, welches ferner einen zugewiesenen Proxy-Navigationsserver verwendet, welches ferner die Schritte enthält:
weiteres Modifizieren des Hypertext-Inhaltes von der Seite durch ein Modifizieren von URLs von Hyperlinks, um somit auf den Ort von dem Navigationsserver zu zeigen;
Herunterladen, nach einem Auswählen eines Hyperlinks durch den Benutzer, von der angeforderten ursprünglichen Seite, welche als eine Zielseite durch den Navigationsserver bestimmt ist;
Modifizieren des Zielseite-Hypertext-Inhaltes gemäß Schritt F von Anspruch 1 und dem ersten Schritt von Anspruch 4; und
Überführen der modifizierten Netzwerkseite an die Mobilvorrichtung.

6. Verfahren nach Anspruch 1, welches ferner die Schritte enthält:
weiteres Herunterladen, gleichzeitig mit dem Herunterladen von der aktuellen Netzwerkseite in Schritt E, von den nächsten in Reihe stehenden Netzwerkseiten entlang der Navigationsbahn;
Modifizieren von jeder heruntergeladenen Netzwerkseite gemäß dem Schritt F nach Anspruch 1;
Überprüfen, nach einem Empfang von einer angeforderten Navigationszieladresse von einer jeglichen Netzwerkseite, eines Cache-Speichers von einem Navigationsserver für die Netzwerkseite;
Aktualisieren des Cache-Speichers gemäß der aktualisierten Bahnnavigation, wenn notwendig;
Senden der jeweiligen Netzwerkseite von dem Navigationsserver an die Benutzer-Mobilvorrichtung, wenn die Navigations-Zieladresse mit irgendeiner der Netzwerkseiten in dem Navigationsserver-Cache-Speicher übereinstimmt.

7. Verfahren nach Anspruch 6, welches ferner die Schritte enthält:
Verbinden, vor dem Modifizieren der heruntergeladenen Netzwerkseiten, von mehreren Netzwerkseiten in eine vereinte Netzwerkseite, wobei die Größe von der vereinten Netzwerkseite gemäß den Mobilvorrichtungs-Beschränkungen beschränkt ist;
Modifizieren der vereinten Netzwerkseite gemäß dem Schritt F nach Anspruch 1 und dem ersten Schritt nach Anspruch 5;
Senden der modifizierten, vereinten Netzwerkseite an die Benutzer-Mobilvorrichtung; und
Anzeigen der jeweiligen Netzwerkseite, welche an der vereinten Netzwerkseite platziert ist, nach einer Benutzeranforderung nach einer Zieladresse, welche mit einer von den Netzwerkseiten von der vereinten Netzwerkseite übereinstimmt.

8. Verfahren nach Anspruch 1, bei welchem das Navigationselement den aktuellen Bahnort-Code und einen zweiten Code enthält, welcher eine Anforderung zum Bewegen auf eines anzeigt: die nächste oder vorherige Netzwerkseite entlang der Navigationsbahn.

9. Verfahren nach Anspruch 1, bei welchem das Navigationselement einen Code enthält, welcher eine Anforderung zum Neuladen der Navigationsbahn von der Navigationsbahn-Quelle und zum Aktualisieren des Orts-Codes von dem Benutzer-Vermittler auf die erste Bahn anzeigt.

10. Verfahren nach Anspruch 1, welches ferner den Schritt eines Erzeugens von einer Bahnkennfeld-Seite enthält, welche eine Netzwerkseite ist, welche eine Liste von Verbindungen enthält, bei welcher jede Verbindung auf eine von den Netzwerkseiten zeigt.

11. Verfahren nach Anspruch 10, bei welchem jedes Navigationselement von der Bahnkennfeld-Seite einen Code enthält, welcher den geeigneten Netzwerkseite-Ort anzeigt, welches ferner den Schritt eines Anzeigens der Bahnkennfeld-Seite auf der Benutzeranzeige enthält.

12. Verfahren nach Anspruch 1, welches ferner den Schritt eines Modifizierens von einer jeglichen Netzwerkseite enthält, welche Hyperlinks enthält, welche auf Netzwerkseiten zeigen, durch ein derartiges Modifizieren der Hyperlinks, so dass sie auf den Ort von dem Navigationsserver zeigen.

13. Verfahren nach Anspruch 1, bei welchem die Hypertext-Sprache in einem WML-Format ist.

14. Verfahren nach Anspruch 1, bei welchem die Mobilvorrichtung eine Mobiltelefon-Vorrichtung ist.

15. Verfahren nach Anspruch 1, welches ferner den Schritt eines Auswählens von Netzwerkseiten enthält, wobei der Auswahlbetrieb durch den Benutzer durchgeführt wird.

16. Verfahren nach Anspruch 15, bei welchem der Auswahlbetrieb durch professionelle Editoren durchgeführt wird, welches ferner den Schritt eines für die Benutzer zugreifbaren Platzierens der Navigationsbahn enthält.

17. Verfahren nach Anspruch 15, bei welchem die Auswahl auf einer jeglichen dynamisch erzeugten Computer-generierten Auswahl von Netzwerkseiten, welche eine dynamische Seitenliste ist, verarbeitet wird und darauf basiert.

18. Verfahren nach Anspruch 17, welches ferner die Schritte enthält:
Präsentieren der dynamischen Seitenliste an den Benutzer; und
Ermöglichen, dass der Benutzer direkt auf einen Ort innerhalb der Navigationsbahn umstellt, unter Verwendung der dynamischen Seitenliste.

19. Verfahren nach Anspruch 18, bei welchem die Auswahl ferner die Schritte enthält:
Präsentieren der dynamischen Seitenliste an den Benutzer;
Ermöglichen, dass der Benutzer mehrere Netzwerkseiten aus der dynamischen Seitenliste auswählt;
Aktualisieren, nach einer Vollendung der Benutzerauswahl, von der dynamischen Seitenliste, so dass sie lediglich die durch den Benutzer ausgewählten Netzwerkseiten enthält.

20. Verfahren nach einem der Ansprüche 17, 18 und 19, bei welchem die dynamische Seitenliste eine Suchergebnisliste ist.

21. Verfahren nach einem der Ansprüche 17, 18 und 19, bei welchem die dynamische Seitenliste eine Inbox-Mailliste ist.

22. Verfahren nach einem der Ansprüche 17, 18 und 19, bei welchem die dynamische Seitenliste gemäß definierter Regeln basierend auf aktuellen Netzwerkseite-Eigenschaften erzeugt ist.

23. Verfahren nach Anspruch 7, bei welchem jede Netzwerkseite ein WML-Stapel ist, und die Netzwerkseiten zu der vereinte Netzwerkseite in der Form von einem Stapel zusammengefasst sind, welcher Karten enthält, welche aus den unterschiedlichen WML-Stapeln von der Navigationsbahn ausgewählt sind.

24. Verfahren nach Anspruch 22, welches ferner den Schritt eines Anzeigens von Netzwerkseiten, welche lokal im Benutzer-Vermittler sind, aus dem vereinten Stapel, nachdem der Benutzer eine Navigation auf solche Seiten anfordert.

25. Verfahren nach Anspruch 22, welches ferner den Schritt eines Ansammelns von WML-Seiten enthält, bis eine Größe von dem vereinten Stapel mit Bezug auf spezifische Mobilvorrichtungs-Fähigkeiten optimiert ist.

26. Kommunikationsserver, welcher Navigations-Zweckmäßigkeiten durch ein Netzwerk von einer Hypertext-Sprache basierend auf Netzwerkseiten von zugewiesenen Mobilvorrichtungen unterstützt, um den Inhalt von den Netzwerkseiten anzuzeigen und eine Benutzer-Interaktion zu ermöglichen, wobei der Server enthält:
A. ein Verwaltungsmittel zum Organisieren von einer dynamischen Ansammlung von Netzwerkseiten, Anordnen der Ansammlung zu Navigationsbahnen, welche Sequenzen von Netzwerkseiten-URLs sind, und Speichern der Navigationsbahnen;
B. ein Identifikationsmittel zum Aktualisieren von einem aktuellen Benutzerort innerhalb der Navigationsbahn und Aufzeichnen von einem Bahnort-Code, welcher der Code von dem Ort ist;
C. ein Kommunikationsmittel zum Herunterladen der Netzwerkseite-Daten gemäß einem aktuellen Bahnort-Code und Senden von modifizierten Netzwerkseiten an Benutzer-Mobilvorrichtungen;
D. ein Modifikationsmittel zum Manipulieren des aktuellen Netzwerkseite-Hypertext-Inhaltes durch:
D1. Hinzufügen von Hypertext-Navigationselementen, welche auf Navigationsoptionen verweisen;
D2. Austauschen von URLs-Referenzen von eingebetteten Objekten in absolute URL-Referenzen; und
D3. Hinzufügen von einem weiteren Hypertext-Sprache-Inhalt oder Befehl;
E. Ein Bahn-Modifikationsmodul zum Aktualisieren der Navigationsbahn gemäß einem neuen Navigationsseite-Typ, einer Adresse oder einem Inhalt.

27. Server nach Anspruch 26, welcher ferner ein Aktualisierungsmodul zum Modifizieren der Navigationsbahn gemäß aktueller Umstände enthält.

28. Server nach Anspruch 26, welcher ferner ein Vor-Einfang-Modul enthält, welches ein Herunterladen der nächsten in Reihe stehenden Seiten entlang der Navigationsbahn, gleichzeitig mit einem Herunterladen von der aktuellen Netzwerkseite, ermöglicht.

29. Server nach Anspruch 26, welcher ferner ein Komprimierungsmodul enthält, welches ein Zusammenfassen von mehreren Netzwerkseiten zu einer vereinten Netzwerkseite ermöglicht, wobei die Größe von der vereinten Netzwerkseite gemäß den Mobilvorrichtungs-Beschränkungen beschränkt ist.

30. Server nach Anspruch 26, bei welchem das Navigationselement den aktuellen Bahnort-Code und einen zweiten Code enthält, welcher eine Anforderung zum Bewegen auf die nächste oder vorherige Netzwerkseite entlang der Navigationsbahn anzeigt.

31. Server nach Anspruch 26, bei welchem das Navigationselement einen Code enthält, welcher eine Anforderung zu einem Neuladen der Navigationsbahn aus der Navigationsbahn-Quelle und zum Aktualisieren des Orts-Codes von dem Benutzer-Vermittler auf die erste Bahn anzeigt.

32. Server nach Anspruch 26, welcher ferner ein Seitenerzeugungsmodul zum Erzeugen von einer Bahnkennfeld-Seite enthält, welche eine Liste von Verbindungen enthält, bei welcher jede Verbindung auf eine von den Netzwerkseiten zeigt.

33. Server nach Anspruch 26, bei welchem jedes von den Navigationselementen einen Code enthält, welcher den geeigneten Netzwerkseite-Ort anzeigt, und die Bahnkennfeld-Seite auf der Benutzeranzeige anzeigt.

34. Server nach Anspruch 26, bei welchem die Hypertext-Sprache in einem WML-Format ist.

35. Server nach Anspruch 26, bei welchem die Mobilvorrichtung eine Mobiltelefon-Vorrichtung ist.

36. Server nach Anspruch 26, welcher ferner ein Auswahlmittel zum Auswählen von Netzwerkseiten enthält, wobei der Auswahlbetrieb durch den Benutzer durchgeführt wird.

37. Server nach Anspruch 36, bei welchem der Auswahlbetrieb durch professionelle Editoren durchgeführt wird, welche ein für die Benutzer zugreifbares Platzieren der Navigationsbahn ermöglichen.

38. Server nach Anspruch 26, bei welchem die Navigationsbahn auf eine vorgegebene Struktur von Netzwerkseiten ausgelegt ist.

39. Server nach Anspruch 36, bei welchem der Auswahlbetrieb auf einer jeglichen dynamisch erzeugten Computer-generierten Auswahl von Netzwerkseiten, welche eine dynamische Seitenliste ist, verarbeitet wird und darauf basiert.

40. Server nach Anspruch 39, welcher ferner ein interaktives Modul enthält, welches es dem Benutzer ermöglicht, die dynamische Seitenliste zu modifizieren.

41. Server nach einem der Ansprüche 37, 38 und 39, bei welchem die dynamische Seitenliste eine Suchergebnisliste ist.

42. Server nach einem der Ansprüche 37, 38 und 39, bei welchem die dynamische Seitenliste eine Inbox-Mailliste ist.

43. Server nach einem der Ansprüche 37, 38 und 39, bei welchem die dynamische Seitenliste gemäß definierter Regeln basierend auf Eigenschaften von der aktuellen Netzwerkseite erzeugt ist.

44. Server nach Anspruch 29, bei welchem jede Netzwerkseite ein WML-Stapel ist, und die Netzwerkseiten zu der vereinten Netzwerkseite in der Form von einem Stapel zusammengefasst sind, welcher Karten enthält, welche aus den unterschiedlichen WML-Stapeln von der Navigationsbahn eingesammelt sind.

45. Server nach Anspruch 44, welcher ferner ein Optimierungsmodul zum Einsammeln von WML-Seiten enthält, bis die Größe von dem vereinten Stapel mit Bezug auf spezifische Mobilvorrichtungs-Fähigkeiten optimiert ist.

## Revendications

1. Procédé informatique de mise en oeuvre d'une plateforme dynamique de navigation pour l'orientation à travers des pages réseau basées sur du langage hypertextuel relatives à un mobile, ledit procédé comprenant les étapes suivantes :
A. Réception de tout ensemble de pages réseau et réorganisation de celui-ci en routes de navigation, qui sont des séquences d'URLs de pages réseau ;
B. Mise en place d'une route de navigation à une position accessible sur le réseau ;
C. Chargement de la route de navigation à partir de la source de route de navigation ;
D. Identification de la page réseau en cours, qui est la position instantanée de l'utilisateur sur la route de navigation ;
E. Téléchargement des données de page réseau de la page réseau correspondant à la page réseau en cours;
F. Modification du contenu hypertextuel de la page réseau en cours pour produire une page réseau modifiée par :
F1. Ajout d'éléments de navigation hypertextuels reliant aux options de navigation, tel que déterminé par le type de route et de position sur la route ;
F2. Echange de références URLs d'objets incorporés en références URL absolues ; et
F3. Ajout de contenu ou de commande supplémentaire en langage hypertextuel ;
G. Envoi du contenu modifié de page réseau à l'affichage utilisateur ; et
H. Modification de la route de navigation selon le type, le contenu ou l'adresse de la page réseau en cours;
I. Répétition des étapes D, E, F, G et H pour toute nouvelle page réseau.

2. Procédé selon la revendication 1, permettant en outre l'interaction de l'utilisateur comprenant les étapes suivantes :
J. Présentation sur un dispositif d'affichage mobile de l'information respective basée sur le contenu de la page réseau en cours;
K. Autorisation de l'interaction de l'utilisateur en permettant à l'utilisateur de choisir au moins une option de navigation, basée sur des éléments de navigation incorporés pour permettre la navigation sur la route de navigation ;
L. Autorisation pour l'utilisateur d'accéder au contenu ou à la commande hypertextuel(le) ajouté(e) ;
M. Lors du choix de l'option de navigation par l'utilisateur, respectivement identification de l'adresse de navigation de destination et mise à jour de la page au cours de la navigation.

3. Procédé selon la revendication 1, comprenant en outre l'étape suivante : avant chargement de la route de navigation, mise à jour de la route de navigation en fonction des événements courants, par exemple le temps ou la position.

4. Procédé selon la revendication 2, comprenant en outre l'étape d'autorisation pour l'utilisateur d'éditer la route de navigation, par exemple d'effacer n'importe quelle page.

5. Procédé selon la revendication 1, utilisant un serveur proche désigné, comprenant en outre les étapes suivantes :
- Modification supplémentaire du contenu hypertextuel de la page en modifiant les URLs des hyperliens de manière à pointer la position du serveur de navigation ;
- Lors du choix d'un hyperlien par l'utilisateur, téléchargement de la page originale demandée, définie comme page de destination par le serveur de navigation ;
- Modification du contenu hypertextuel de page de destination selon l'étape F de la revendication 1 et la première étape de la revendication 4 ; et
- Transfert de la page réseau modifiée au mobile.

6. Procédé selon la revendication 1, comprenant en outre les étapes suivantes :
- En même temps que le téléchargement de la page réseau en cours pendant l'étape E, téléchargement supplémentaire des pages réseau immédiatement suivantes sur la route de navigation ;
- Modification de chaque page réseau téléchargée selon l'étape F de la revendication 1 ;
- Lors de la réception de l'adresse de destination de navigation demandée de toute page réseau, consultation de l'antémémoire du serveur de navigation pour ladite page réseau ;
- Mise à jour de l'antémémoire en fonction de la route de navigation mise à jour si nécessaire ;
- Envoi de la page réseau respective depuis le serveur de navigation au mobile utilisateur si l'adresse de navigation de destination coïncide avec une quelconque des pages réseau dans l'antémémoire du serveur de navigation.

7. Procédé selon la revendication 6, comprenant en outre les étapes suivantes :
- Avant modification des pages réseau téléchargées, fusion de plusieurs pages réseau en une seule page réseau unifiée où la taille de la page réseau unifiée est limitée par les contraintes du mobile ;
- Modification de la page réseau unifiée selon l'étape F de la revendication 1 et la première étape de la revendication 5 ;
- Envoi de la page réseau unifiée modifiée au mobile utilisateur ; et
- Affichage de la page réseau respective, à la place de la page réseau unifiée, sur la demande de l'utilisateur pour une adresse de destination coïncidant avec une des pages réseau de la page réseau unifiée.

8. Procédé selon la revendication 1, dans lequel l'élément de navigation contient le code d'emplacement actuel de route et un second code indiquant une demande de déplacement vers une page réseau parmi la suivante ou la précédente sur la route de navigation.

9. Procédé selon la revendication 1, dans lequel l'élément de navigation contient un code indiquant une demande de rechargement de la route de navigation depuis la source de route de navigation et une demande de mise à jour du code-emplacement de l'agent utilisateur à la première route.

10. Procédé selon la revendication 1, comprenant en outre l'étape de génération d'une page de topologie de route, qui consiste en une page réseau contenant une liste de liens où chaque lien pointe vers une des pages réseau.

11. Procédé selon la revendication 10, dans lequel chaque élément de navigation de la page de topologie de route contient un code indiquant l'emplacement de page réseau approprié, comprenant en outre l'étape d'affichage de la page de topologie de route sur l'affichage utilisateur.

12. Procédé selon la revendication 1, comprenant en outre l'étape de modification de toute page réseau contenant des hyperliens pointant vers des pages réseau en modifiant lesdits hyperliens afin de pointer vers l'emplacement du serveur de navigation.

13. Procédé selon la revendication 1, dans lequel le langage hypertextuel est en format WML.

14. Procédé selon la revendication 1, dans lequel le mobile est un téléphone cellulaire.

15. Procédé selon la revendication 1, comprenant en outre l'étape de choix des pages réseau où l'opération de sélection est exécutée par l'utilisateur.

16. Procédé selon la revendication 15, dans lequel l'opération de sélection est exécutée par les éditeurs professionnels comportant en outre l'étape de rendre la route de navigation accessible aux utilisateurs.

17. Procédé selon la revendication 15, dans lequel la sélection est exécutée et basée sur tout ensemble de pages réseau généré par ordinateur et créé de manière dynamique, qui est une liste des pages dynamiques.

18. Procédé selon la revendication 17, comprenant en outre les étapes suivantes :
- Présentation de la liste des pages dynamiques à l'utilisateur ; et
- Autorisation pour l'utilisateur de se repositionner directement à une position sur la route de navigation en utilisant la liste des pages dynamiques.

19. Procédé selon la revendication 18, dans lequel la sélection comporte en outre les étapes suivantes :
- Présentation de la liste des pages dynamiques à l'utilisateur ;
- Autorisation pour l'utilisateur de choisir des pages réseau multiples à partir de la liste des pages dynamiques.
- Après complétude de la sélection par l'utilisateur, mise à jour de la liste des pages dynamiques pour contenir seulement lesdites pages réseau choisies par utilisateur.

20. Procédé selon les revendications 17, 18 et 19, dans lequel la liste des pages dynamiques est une liste de résultat de recherche.

21. Procédé selon les revendications 17, 18 et 19, dans lequel la liste des pages dynamiques est une liste de courrier de boîte de réception.

22. Procédé selon les revendications 17, 18 et 19, dans lequel la liste des pages dynamiques est créée selon des règles définies basées sur les propriétés de page réseau en cours.

23. Procédé selon la revendication 7, dans lequel chaque page réseau est un paquet WML et dans lequel les pages réseau sont fusionnées ensemble en une seule page réseau unifiée sous la forme d'un paquet contenant des cartes rassemblées à partir des différents paquets WML de la route de navigation.

24. Procédé selon la revendication 22, comprenant en outre l'étape d'affichage de pages réseau localement chez l'agent utilisateur à partir du paquet unifié sur demandes de navigation utilisateur pour de telles pages.

25. Procédé selon la revendication 22, comprenant en outre l'étape de rassemblement de pages WML jusqu'à ce que la taille du paquet unifié soit optimisée par rapport aux capacités spécifiques du mobile.

26. Serveur de communication supportant des utilitaires de navigation à travers des pages réseau basées sur du langage hypertextuel relatives à ces mobiles pour afficher le contenu des pages réseau et permettre l'interaction de l'utilisateur, ledit serveur comprenant :
A. Des moyens de gestion pour organiser un ensemble dynamique de pages réseau, réorganiser ledit ensemble en routes de navigation, qui sont des séquences d'URLs de pages réseau et mémoriser lesdites routes de navigation ;
B. Des moyens d'identification pour mettre à jour l'emplacement actuel de l'utilisateur sur la route de navigation et enregistrer un code-position de route, qui représente le code de ladite position ;
C. Des moyens de communication pour télécharger les données de page réseau en fonction du code-position de la route en cours et envoyer les pages réseau modifiées aux dispositifs mobiles des utilisateurs ;
D. Des moyens de modification pour manipuler le contenu hypertextuel de page réseau actuel en :
D1. Ajoutant des éléments de navigation hypertextuels reliant à des options de navigation ;
D2. Permutant les références URL d'objets incorporés avec des références URL absolues ; et
D3. Ajoutant en outre un contenu ou une commande en langage hypertextuel ;
E. Un module de modification de route pour mettre à jour la route de la navigation en fonction du contenu, de l'adresse ou du type de la nouvelle page de navigation.

27. Serveur selon la revendication 26, comprenant en outre un module de mise à jour pour modifier la route de la navigation en fonction des événements courants.

28. Serveur selon la revendication 26, comprenant en outre un module de tamponnage anticipé permettant de télécharger les pages immédiatement suivantes sur la route de navigation et en même temps de télécharger la page réseau en cours.

29. Serveur selon la revendication 26, comprenant en outre un module de compression permettant de fusionner plusieurs pages réseau en une seule page réseau unifiée où la taille de la page réseau unifiée est limitée par les contraintes du mobile ;

30. Serveur selon la revendication 26, dans lequel l'élément de navigation contient le code de position de route en cours et un second code indiquant une demande de déplacement vers la page réseau suivante ou précédente sur la route de navigation.

31. Serveur selon la revendication 26, dans lequel l'élément de navigation contient un code indiquant une demande de rechargement de la route de la navigation à partir de la source de route de navigation et de mise à jour du code-emplacement de l'agent utilisateur à la première route.

32. Serveur selon la revendication 26, comprenant en outre un module générateur de pages pour créer une page de topologie de route contenant une liste de liens où chaque lien pointe sur une des pages réseau.

33. Serveur selon la revendication 26, dans lequel chacun des éléments de navigation contient un code indiquant l'emplacement de page réseau approprié et affichant la page de topologie de route sur l'affichage utilisateur.

34. Serveur selon la revendication 26, dans lequel le langage hypertextuel est en format WML.

35. Serveur selon la revendication 26, dans lequel le mobile est un téléphone cellulaire.

36. Serveur selon la revendication 26, comprenant en outre des moyens de sélection pour choisir des pages réseau où l'opération de sélection est exécutée par l'utilisateur.

37. Serveur selon la revendication 36, dans lequel l'opération de sélection est exécutée par les éditeurs professionnels, permettant de rendre la route de la navigation accessible aux utilisateurs.

38. Serveur selon la revendication 26, dans lequel la route de la navigation est adaptée à une structure donnée de pages réseau.

39. Serveur selon la revendication 36, dans lequel l'opération de sélection est exécutée et basée sur tout ensemble de pages réseau généré par ordinateur et créé de manière dynamique, qui est une liste des pages dynamiques.

40. Serveur selon la revendication 39, comprenant en outre un module interactif permettant à l'utilisateur de modifier la liste des pages dynamiques.

41. Serveur selon les revendications 37, 38 et 39, dans lequel la liste des pages dynamiques est une liste de résultat de recherche.

42. Serveur selon les revendications 37, 38 et 39, dans lequel la liste des pages dynamiques est une liste de courrier de boîte de réception.

43. Serveur selon les revendications 37, 38 et 39, dans lequel la liste des pages dynamiques est créée selon des règles définies basées sur les propriétés de page réseau en cours.

44. Serveur selon la revendication 29, dans lequel chaque page réseau est un paquet WML et dans lequel les pages réseau sont fusionnées ensemble en une seule page réseau unifiée sous la forme d'un paquet contenant des cartes rassemblées à partir des différents paquets WML de la route de navigation.

45. Serveur selon la revendication 44, comprenant en outre un module d'optimisation pour rassembler des pages WML jusqu'à ce que la taille du paquet unifié soit optimisée par rapport aux capacités spécifiques du mobile.
